# EUROPEAN PATENT SPECIFICATION

(11) **EP 1 704 080 B1**
(45) Date of publication and mention of the grant of the patent: **04.06.2008**
(21) Application number: 05700748.6
(22) Date of filing: 07.01.2005
(51) Int. Cl.: B62D 47/02, B60D 5/00, B61D 17/22

(54) **ARTICULATED PASSENGER VEHICLE PROVIDED WITH SEATS DISPOSED IN A FLEXIBLE CAR BODY SECTION OF THE VEHICLE**
GELENK-PASSAGIERFAHRZEUG, DAS MIT IN EINEM FLEXIBLEM AUTOAUFBAUABSCHNITT DES FAHRZEUGS ANGEORDNETEN SITZEN VERSEHEN IST
VEHICULE POUR PASSAGERS ARTICULE EQUIPE DE SIEGES DANS LA SECTION ARTICULEE DU VEHICULE

(30) Priority: 09.01.2004 GB 0400427
(43) Date of publication of application: 27.09.2006
(73) Proprietor: Bombardier Transportation GmbH, 13627 Berlin (DE)
(72) Inventor: PLANQUIN, Bernard, F-59620 Aulnoye (FR); PERLAU, Dominique, B-7972 Quevaucamps (BE); VANBERTEN, Philippe, F-59990 Preseau (FR)
(74) Representative: Breese, Pierre
(86) International application number: PCT/EP2005/000097
(87) International publication number: WO 2005/068279

(56) References cited:
- DE-A1- 4 439 382
- US-A- 2 251 584
- US-A- 3 030 897

## Description

The invention relates to articulated passenger vehicles provided with two rigid car body sections linked by a flexible car body section that forms a communication area. More specifically, the invention relates to the provision of passenger seats that at least partially extend into the communication passageway.

An articulated bus with several car bodies that are linked by intercommunication platforms surrounded by bellows is known from DE 44 39 382, which discloses the features of the preamble of claims 1 and 15. Inward-facing seats are positioned on the intercommunication platform, on both sides of a passage of the intercommunication. The seats are fixed in relation to the platform. No appropriate measures are taken to prevent passengers from accessing the space located between the seats and the bellows. A similar configuration is known from FR 2 581 016. In GB 689 147, two pairs of seats are provided in the intercirculation, fixed in relation to the intercommunication platform one on each side of a passage of the intercirculation. The two seats of each pair face each other. No appropriate measures are taken to prevent passengers from accessing the space located behind the seat's backrest.

A large capacity coach with two rigid passenger car body sections interconnected by a hinged joint defining an horizontal transverse pivot axis is known from US 2 251 584. The joint does not however allow rotation about a vertical axis of rotation. Inward-facing seats are disposed adjacent to the flexible body section on opposite sides of a passage, which extends through the whole vehicle. Access to the space between the seats on both sides of the flexible body section is prevented by panel means. However, these panel means cannot accommodate the relative motion between the car body sections and the seats do not extend into the flexible body section.

There is a need for an articulated vehicle with seating space in the intercommunication area, which is safe under conditions of use.

According to a first aspect of the present invention, there is provided an articulated passenger vehicle comprising:
- a first rigid car body section;
- a second rigid car body section that rotates in relation to the first rigid car body section at least about a vertical axis of rotation;
- a flexible car body section extending between the first and second rigid car body sections and defining an intercommunication area;
- a first seat supported by the first rigid car body section;
- an element supported by one of the second rigid car body section or the flexible car body section; and
- deformable means, which deform when the second rigid car body section rotates in relation to the first rigid car body section about the vertical axis of rotation to prevent the opening, between the first seat and the element, of a gap accessible from the intercommunication area.

The relative movement between the rigid car body sections can be of any type that provides at least a freedom of movement of rotation about a vertical axis of rotation. The vertical rotation axis can be fixed in relation to the first car body section and/or the second car body section. Alternatively, it can be a movable instantaneous axis of rotation. Other movements such as lateral translation and/or rotation about a horizontal transverse axis and/or rotation about a horizontal longitudinal axis can also be allowed.

Thanks to the deformable means, it becomes possible to dispose seats close to, or extending into, the deformable car body section without running any risk of injury. The element can be any part that is fixed to, or supported by the second rigid car body section or the flexible car body section, e.g. a partition, a side wall portion or a seat.

According to a first embodiment, the first seat bears against the element and the deformable means comprise resilient biasing means for biasing the first seat towards the element and/or the element towards the first seat.

Thanks to the resilient biasing means, the seat remains in contact with the element so that passengers or objects are prevented from being squcczcd between the seat and the element.

According to onc embodiment, the first seat is movable with respect to the first rigid car body section and the resilient biasing means comprise seat-biasing means biasing the first seat towards the element. Preferably, guiding means are provided for guiding the motion of the first seat in relation to the first rigid car body section. This motion can be a straight translation or a compound motion.

The element may be either fixed or movable in relation to said one of the second rigid car body section or the flexible car body section. In the latter case, the resilient biasing means advantageously comprise resilient element-biasing means for biasing the element towards the first seat. According to a very simple embodiment, the resilient element-biasing means comprise a spring attached to the element and to the first rigid car body section.

According to another embodiment, the deformable means comprise a convex flexible sheet protruding towards a longitudinal center plane of the vehicle. Advantageously, the flexible sheet comprises a silicone layer and a reinforcing layer providing mechanical strength.

Preferably, the element is a second seat supported by the second rigid car body section. The two seats together form a continuous seating structure.

Similar principles are applicable to an intercommunication area which does not necessarily include seat. According to another aspect of the invention, there is provided an articulated passenger vehicle comprising:
- a first rigid car body section;
- a second rigid car body section that rotates in relation to the first rigid car body section;
- a flexible car body section extending between the first and second rigid car body sections and comprising a bellows; and
- a deformable sheet preventing access to the bellows, said deformable sheet comprising:
   - a first fixed portion that is stationary in relation to the first rigid car body section;
   - a second fixed portion that is stationary in relation to the second rigid car body section; and
   - an intermediate convex portion protruding towards a longitudinal vertical center plane of the flexible car body section, which deforms when the second car body section rotates in relation to the first car body section.

The convex overall shape of the sheet is considered particularly advantageous for preventing entry of objects into the gap created when the rigid car body sections move relative to one another. Preferably, the first fixed portion can be fixed to a first seat, and the second fixed portion can be fixed to a second seat.

Other advantages and features of the invention will become more clearly apparent from the following description of specific embodiments of the invention given as non-restrictive examples only and represented in the accompanying drawings in which:
- figure 1 is a top view, partially in section, illustrating a passenger vehicle according to a first embodiment of the invention;
- figure 2 is a schematic view of two seats of the passenger vehicle of claim 1;
- figure 3 is a cross-section of a detail of the passenger vehicle of claim 1;
- figure 4 is a planar view, partially in section, illustrating the passenger vehicle of figure 1, in a curve;
- figure 5 is a schematic view of an intercommunication area of a vehicle according to a second embodiment of the invention provided with one movable seat;
- figure 6 is a schematic view of an intercommunication area of a vehicle according to a third embodiment of the invention provided two movable seats and return springs;
- figure 7 is a curve illustrating the forces generated by the springs of the embodiment of figure 6;
- figure 8 is a top view, partially in section, illustrating a passenger vehicle according to a fourth embodiment of the invention;
- figure 9 is a sectional view along lines IX-IX of figure 8;
- figure 10 is a cross section along lines X-X of figure 8; and
- figure 11 is a planar view, partially in section, illustrating the passenger vehicle of figure 8, in a curve.

Throughout the description, reference numbers introduced once for describing elements of one first embodiment will also be used, where required, to designate identical or similar elements in other embodiments.

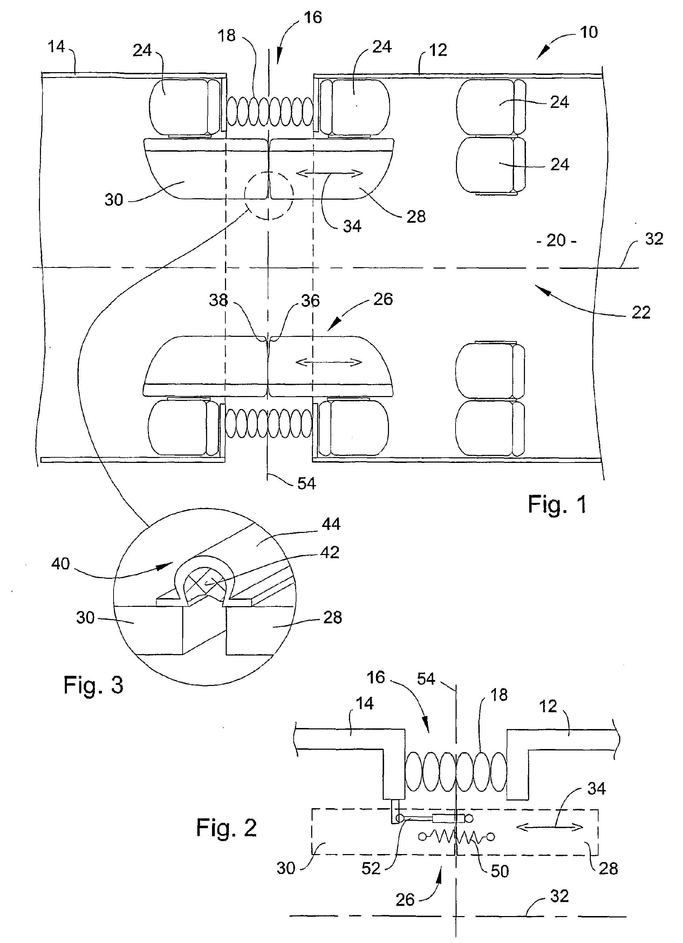

With reference to figures 1 to 3, an articulated passenger vehicle 10, in this particular example a railway vehicle, comprises two rigid car body sections 12, 14 interconnected by a flexible body section 16. The flexible body section 16 includes a bellows 18 surrounding a continuous floor section 20 that forms an intercommunication area providing a central passage and generally designated at 22. An articulated coupling (not shown) transmits the longitudinal forces between the two rigid car body sections 12, 14 while allowing the two rigid car body sections 12, 14 to move with respect to one another, as is well known in the art, and in particular to pivot about a vertical axis of rotation. The vertical rotation axis can be fixed in relation to the car body section 12 and/or the car body section 14. Alternatively, it can be a movable instantaneous axis of rotation.

Passenger seats 24 are provided in both rigid car body sections. Two inward-facing bench-like seating units 26 are disposed on opposite sides of the central passage 22, which extends through the intercommunication area and allows communication between the two rigid car body sections 12, 14. Each seat unit 26 comprises a movable seat 28 and a fixed seat 30. The fixed seat 30 is supported by, and fixed to, the floor and/or the wall of the rigid car body section 14. The movable seat 28 is supported by the rigid car body section 12 and guided by a rail guide (not shown) fixed to the floor of the rigid car body section 12 allowing forward and backward translation of the movable seat 28 in relation to the rigid car body section 12 parallel to a longitudinal axis 32 of the rigid car body section 12, as schematically illustrated by arrow 34 in figures 1 and 2. The two seats 28, 30 extend towards another into the flexible car body section 16. An edge 36 of the movable seat 28 bears against an edge 38 of the fixed seat 30. The bearing edges 36, 38 preferably have an arcuate, cylindrical or spherical shape and are provided with self-lubricating means. The edges 36, 38 are covered by an expansible joint 40, shown in figure 3 but omitted in figure 1, preventing access to the seat edges. The joint 40 preferably includes a core of elastomeric foam 42 covered with a layer of leather or fabric 44 and extends between the padding of the fixed seat 30 and the padding of the movable seat 28. As shown diagrammatically in figure 2, a tension spring 50 is attached to the movable seat 28 and to the fixed seat 30 and biases the movable seat 28 towards the fixed seat 30 so as to ensure sufficient contact force between the edges 36, 38 of the two seats. The spring 50 can be located beneath the seat cushions or behind the seats' backrests. A damper 52 can be used if necessary to soften the movement of the movable seat 28 with respect to the fixed seat 30.

In this example, the contacting edges 36, 38 of the two seats are substantially centered in relation to a median transverse plane 54 of the bellows 18 when the two rigid car body sections 12, 14 are aligned. More generally, the edge 36 of the movable seat 28 should preferably be close to the center of rotation of the relative motion between the two rigid car body sections, so as to limit as far as possible the relative motion between the seats necessary to maintain contact between the movable seat 28 and the fixed seat 30.

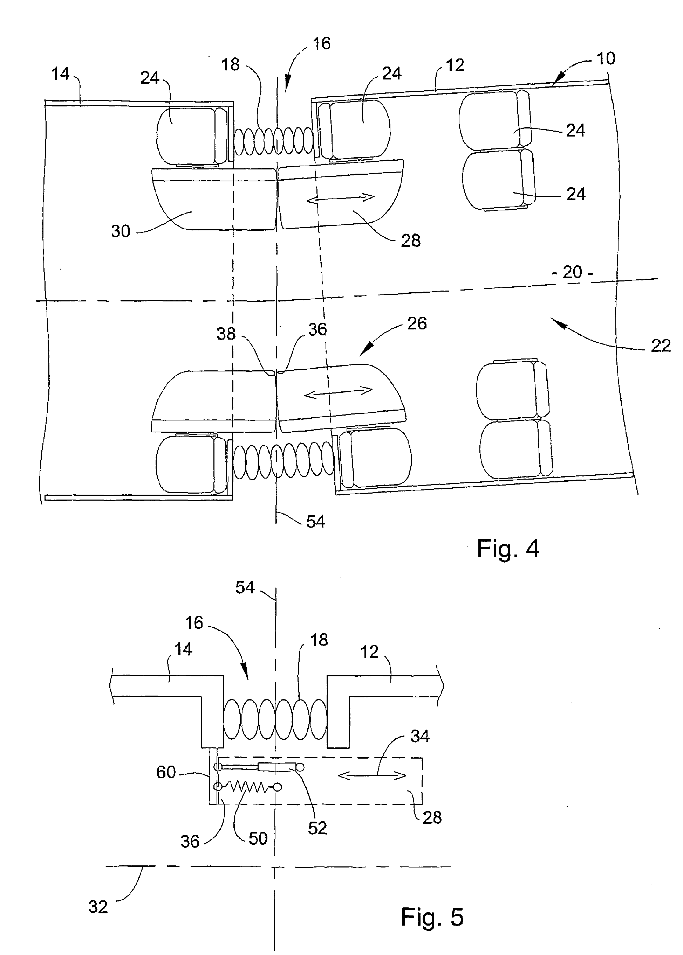

When the vehicle runs in a curve and the rigid car body sections 12, 14 pivot from the position of figure 1 to the position of figure 4, the movable seat 28 located on the outside of the curve tends to move towards the car body section 30 and away from the flexible car body section 16, while the movable seat 28 located on the inside of the curve tends to move away from the flexible car body section 16, pushed by the adjacent fixed seat 30.

A second embodiment of the invention will now be described with reference to figure 5. This embodiment differs from the precedent mainly by the fact that the fixed seat is omitted so that the movable seat 28 directly bears against a partition 60 of the vehicle. A tension spring 50 is directly attached to the movable scat 28 and to the partition 60. The edge 36 of the scat is slightly offset in the longitudinal direction in relation to the median transverse plane 54 of the flexible car body section 16.

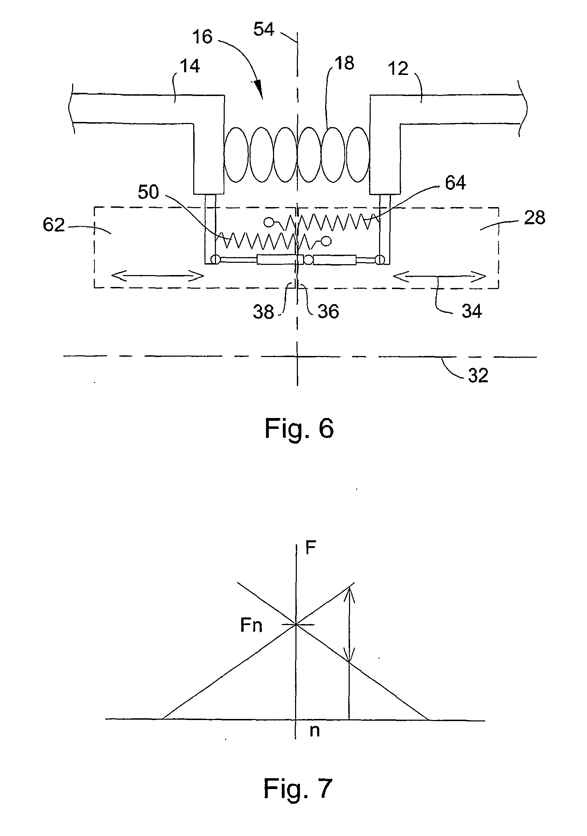

A third embodiment of the invention will now be described with reference to figure 6. This embodiment differs from the first embodiment mainly by the fact that the fixed seat of the first embodiment has been replaced by a second movable seat 62, which is supported by the rigid car body section 14 and guided in translation by a longitudinal rail (not shown) fixed to the rigid car body section 14. A first extension spring 50 is attached to the first movable seat 28 and to the car body section 14, while a second extension spring 64 is attached to the second movable seat 62 and to the car body section 12. The two springs 50, 64 have the same rigidity and are loaded in such a manner that when the two rigid car body sections are aligned, the seats find a stable position in which the transverse median plane 54 of the flexible car body section 16 is tangential to the edges 36, 38 of the two seats. As shown in figure 7, any movement of the seats away from the median plane 54 generates a differential force, which is the algebraic sum of the return forces of the two springs 50, 64. This differential force is proportional to the deflection of the seats and designed to return the two seats to the median position.

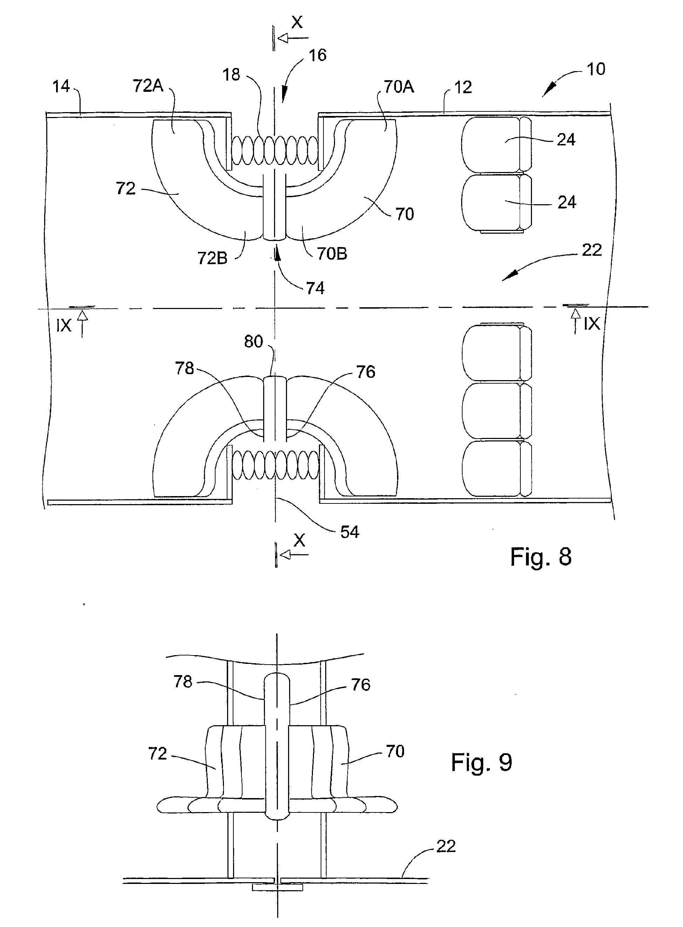

A fourth embodiment of the invention will now be described with reference to figures 8 to 11. The vehicle of the fourth embodiment comprises two rigid car body sections 12, 14 interconnected by a flexible car body section 16 similar to that of the first embodiment. A bellows 18 of the flexible car body section 16 surrounds an intercommunication area 22. The width of the intercommunication area 22 is less than the internal width of the rigid car body sections 12, 14.

Two pairs of arcuate bench-like seats 70, 72 are provided on each side of the passage 22. Each seat 70, 72 is fixed to the floor and/or to the walls of the respective rigid car body section 12, 14 and includes at least one seat portion 70A, 72A that faces away from the flexible car body portion towards the front or rear end of the vehicle, and a seat portion 70B, 72B that extends into the flexible car body section 16 and faces inward towards the longitudinal center plane of the respective rigid car body section and the center part of the intercommunication area 22. Thanks to the arcuate shape of the seats, the space in the restricted area is optimally used.

An arcuate flexible sheet 74 extends between the two seats. The sheet 74 comprises two side portions 76, 78 that are substantially planar and fixed to the edges of the seats 70, 72. In this particular example, the side portions have a substantially triangular shape (see figure 9). This shape is preferred because of its simplicity. However, any other shape that covers the edges of the seats 70 and 72 can be chosen. The two side portions 76, 78 can be substantially rigid or flexible. They are joined by a convex flexible intermediate portion 80 that protrudes inward towards the passage 22. The sheet 74 is preferably a compound sheet including a layer of silicone and/or a layer of woven or non-woven fabric reinforced by sheet metal. The layer of silicone can be charged with small twisted metal wires so as to provide increased mechanical strength to resist vandalism. The resilience of the sheet 74 is such that objects or passengers pushed against it will be bounced off and prevented from entering the space between the two seats.

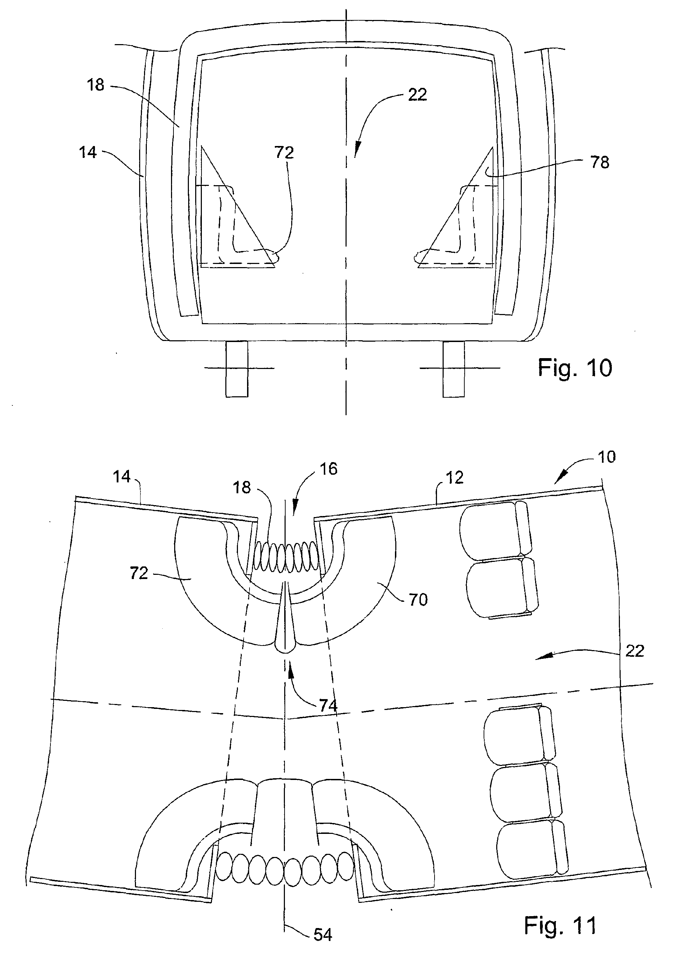

When the rigid car body sections 12, 14 pivot from the position of figure 8 to the position of figure 11, the side portions 76, 78 of the sheet move together with the edges of the seats 70, 72. They come closer together on the inside of the curve and move away from one another on the outside of the curve.

While preferred embodiments of the invention have been described, it is to be understood by those skilled in the art that the invention is naturally not limited to these embodiments. Many variations are possible:

The invention applies both to track-bound vehicles and trackless vehicles.

The coupling between the two car body sections can be a rotary coupling, or a coupling allowing both angular and lateral relative motion of the rigid car body sections.

The spring that biases the movable seat towards the fixed seat can be attached to any part of the rigid car body section. Alternatively, compression springs loaded between the movable seat and the rigid car body section on which the seat is supported can be used to bias the movable seat towards the other rigid car body section.

The seats can be for one or more passengers.

The seats can be disposed on one or on both sides of the passage, facing towards the passage. They can also be disposed on one side only.

The sheet of the fourth embodiment can also be used to link a movable seat similar to scat 28 of the first embodiment which is guided in relation to the rigid car body section 12 to an clement supported by the rigid car body section 14 or the flexible car body section 16. More generally, the flexible sheet can also be used to link any parts fixed in relation to the rigid car body sections.

The movement of the articulated coupling between the rigid car body sections 12, 14 can be of any type that provides at least a freedom of movement of rotation about a vertical axis of rotation. Other movements such as lateral translation and/or rotation about a horizontal transverse axis and/or rotation about a horizontal longitudinal axis can also be allowed.

## Claims

1. An articulated passenger vehicle comprising
- a first rigid car body section (12);
- a second rigid car body section (14) that rotates in relation to the first rigid car body section (12) at least about a vertical rotation axis;
- a flexible car body section (16) extending between the first and second rigid car body sections and delimiting an intercommunication area;
- a first scat (28, 70) supported by the first rigid car body section (12); and
- an element (30, 60, 72) supported by one of the second rigid car body section (30) or the flexible car body section (16);
**characterized in that** the vehicle further comprises deformable means (50, 64, 74), which deform when the second rigid car body section rotates in relation to the first, rigid car body section about the vertical axis of rotation, to prevent the opening, between the first seat and the element, of a gap accessible from the intercommunication area.

2. The articulated vehicle of claim 1, wherein the first seat bears against the element and the deformable means comprise resilient biasing means (50, 64) for biasing the first seat (28) towards the element (30, 60) and/or the element (30, 60) towards the first seat (28).

3. The articulated vehicle of claim 2, wherein the resilient biasing means comprise at least one spring (50, 64).

4. The articulated vehicle of any one of claims 2 or 3, wherein the first seat (28) is movable with respect to the first rigid car body section (12) and the resilient biasing means comprise seat-biasing means (50) biasing the first seat (28) towards the element (30, 60).

5. The articulated vehicle of claim 4, further comprising guiding means for guiding the motion of the first seat (28) in relation to the first rigid car body section (12).

6. The articulated vehicle of claim 4 or claim 5, wherein the element (60) is fixed in relation to said one of the second rigid car body section (14) or the flexible car body section (16).

7. The articulated vehicle of any one of claims 2 to 5, wherein the element (62) is movable in relation to said one of the second rigid car body section (14) or the flexible car body section (16) and the resilient biasing means comprise element-biasing means (64) for biasing the element (62) towards the first seat (28).

8. The articulated vehicle of claim 2, wherein the element-biasing means comprise a spring (64) attached to the element (62) and to the first rigid car body section (12).

9. The articulated vehicle of any one of the foregoing claims, wherein the deformable means comprise a convex flexible sheet (74) protruding towards a longitudinal center plane of the vehicle.

10. The articulated vehicle of claim 9 wherein the flexible sheet (74) comprises a silicone layer and a reinforcing layer providing mechanical strength.

11. The articulated vehicle of any one of the foregoing claims, wherein the element is a second seat (62, 72) supported by the second rigid car body section (14).

12. The articulated vehicle of any one of the foregoing claims, wherein the first seat (28, 70) at least partially extends into the flexible car body section (16).

13. The articulated vehicle of any one of the foregoing claims, wherein
- the flexible car body section has an internal width that is less than the internal width of the first rigid car body section (12);
- the first seat (70) extends into the flexible car body section (16) and includes a first seating portion (70A) that faces towards a longitudinal end of the first rigid car body section (12), and a second seating portion (70B) facing inward towards a longitudinal vertical center plane of the vehicle.

14. The vehicle of claim 13, wherein the seat (70) has an arcuate shape.

15. An articulated passenger vehicle comprising
- a first rigid car body section (12);
- a second rigid car body section (14) that rotates in relation to the first rigid car body section (12); and
- a flexible car body section (16) extending between the first and second rigid car body sections and comprising a bellows (18);
**characterized in that** the vehicle further comprises a deformable sheet (74) preventing access to the bellows (18), said deformable sheet (74) comprising:
- a first fixed portion (76) that is stationary in relation to the first rigid car body section (12);
- a second fixed portion (78) that is stationary in relation to the second rigid car body section (14);
- a convex flexible intermediate portion (80) protruding towards the longitudinal vertical center plane of the flexible car body section (16), which deforms when the second car body section (14) rotates in relation to the first car body section (12).

16. The articulated passenger vehicle of claim 15 wherein the first fixed portion (76) is attached to a first seat (70).

17. The articulated passenger vehicle of claim 16 wherein the second fixed portion (78) is attached to a second seat (72).

18. The articulated vehicle of claim 16 or 17, wherein
- the flexible car body section has an internal width that is less than the internal width of the first rigid car body section (12);
- the first seat (70) extends into the flexible car body section (16) and includes a first seating portion (70A) that faces towards a longitudinal end of the first rigid car body section (12), and a second seating portion (70B) facing inward towards a longitudinal vertical center plane of the vehicle.

19. The vehicle of claim 18, wherein the seat (70) has an arcuate shape.

## Patentansprüche

1. Gelenkiges Fahrzeug zur Personenbeförderung, das Folgendes umfasst:
- einen ersten starren Fahrzeugaufbauabschnitt (12);
- einen zweiten starren Fahrzeugaufbauabschnitt (14), der sich im Verhältnis zum ersten starren Fahrzeugaufbauabschnitt (12) wenigstens um eine vertikale Drehachse dreht;
- einen flexiblen Fahrzeugaufbauabschnitt (16), der zwischen dem ersten und dem zweiten starren Fahrzeugaufbauabschnitt verläuft und einen Übergangsbereich begrenzt,
- einen ersten Sitz (28, 70), der von dem ersten starren Fahrzeugaufbauabschnitt (12) getragen wird, und
- ein Element (30, 60, 72), das von dem zweiten starren Fahrzeugaufbauabschnitt (30) oder dem flexiblen Fahrzeugaufbauabschnitt (16) getragen wird;
**dadurch gekennzeichnet, dass** das Fahrzeug ferner verformbare Mittel (50, 64, 74) umfasst, die sich verformen, wenn sich der zweite starre Fahrzeugaufbauabschnitt im Verhältnis zu dem ersten starren Fahrzeugaufbauabschnitt um die vertikale Drehachse dreht, um zu verhindern, dass sich zwischen dem ersten Sitz und dem Element ein vom dem Übergangsbereich her zugänglicher Spalt öffnet.

2. Gelenkiges Fahrzeug nach Anspruch 1, bei dem der erste Sitz an dem Element anliegt und das verformbare Mittel federnde Vorspannmittel (50, 64) zum Vorspannen des ersten Sitzes (28) in Richtung auf das Element (30, 60) und/oder des Elements (30, 60) in Richtung auf den ersten Sitz (28) umfasst.

3. Gelenkiges Fahrzeug nach Anspruch 2, bei dem die federnden Vorspannmittel wenigstens eine Feder (50, 64) umfassen.

4. Gelenkiges Fahrzeug nach einem der Ansprüche 2 oder 3, bei dem der erste Sitz (28) in Bezug auf den ersten starren Fahrzeugaufbauabschnitt (12) beweglich ist und die federnden Vorspannmittel Sitzvorspannmittel (50) umfassen, die den ersten Sitz (28) in Richtung auf das Element (30, 60) vorspannen.

5. Gelenkiges Fahrzeug nach Anspruch 4, ferner umfassend Führungsmittel zum Führen der Bewegung des ersten Sitzes (28) im Verhältnis zu dem ersten starren Fahrzeugaufbauabschnitt (12).

6. Gelenkiges Fahrzeug nach Anspruch 4 oder Anspruch 5, bei dem das Element (60) im Verhältnis zu dem genannten zweiten starren Fahrzeugaufbauabschnitt (14) oder dem flexiblen Fahrzeugaufbauabschnitt (16) befestigt ist.

7. Gelenkiges Fahrzeug nach einem der Ansprüche 2 bis 5, bei dem das Element (62) im Verhältnis zu dem genannten zweiten starren Fahrzeugaufbauabschnitt (14) oder dem flexiblen Fahrzeugaufbauabschnitt (16) beweglich ist und die federnden Vorspannmittel Elementvorspannmittel (64) zum Vorspannen des Elements (62) in Richtung auf den ersten Sitz (28) umfassen.

8. Gelenkiges Fahrzeug nach Anspruch 2, bei dem die Elementvorspannmittel eine Feder (64) umfassen, die an dem Element (62) und dem ersten starren Fahrzeugaufbauabschnitt (12) angebracht ist.

9. Gelenkiges Fahrzeug nach einem der vorhergehenden Ansprüche, bei dem die verformbaren Mittel ein konvexes flexibles flächiges Teil (74) umfassen, das in Richtung auf eine longitudinale mittlere Ebene des Fahrzeugs vorsteht.

10. Gelenkiges Fahrzeug nach Anspruch 9, bei dem das flexible flächige Teil (74) eine Silikonschicht und eine mechanische Festigkeit verleihende Verstärkungsschicht umfasst.

11. Gelenkiges Fahrzeug nach einem der vorhergehenden Ansprüche, bei dem das Element ein zweiter Sitz (62, 72) ist, der von dem zweiten starren Fahrzeugaufbauabschnitt (14) getragen wird.

12. Gelenkiges Fahrzeug nach einem der vorhergehenden Ansprüche, bei dem der erste Sitz (28, 70) sich wenigstens teilweise in den flexiblen Fahrzeugaufbauabschnitt (16) hinein erstreckt.

13. Gelenkiges Fahrzeug nach einem der vorhergehenden Ansprüche, bei dem
- der flexible Fahrzeugaufbauabschnitt eine Innenbreite hat, die kleiner ist als die Innenbreite des ersten starren Fahrzeugaufbauabschnitts (12);
- der erste Sitz (70) sich in den flexiblen Fahrzeugaufbauabschnitt (16) hinein erstreckt und einen ersten Sitzteil (70A), der einem Längsende des ersten starren Fahrzeugaufbauabschnitts (12) zugekehrt ist, und einen zweiten Sitzteil (70B), der einwärts auf eine longitudinale vertikale mittlere Ebene des Fahrzeugs zu gekehrt ist, aufweist.

14. Fahrzeug nach Anspruch 13, bei dem der Sitz (70) eine bogenförmige Gestalt hat.

15. Gelenkiges Fahrzeug zur Personenbeförderung, das Folgendes umfasst:
- einen ersten starren Fahrzeugaufbauabschnitt (12);
- einen zweiten starren Fahrzeugaufbauabschnitt (14), der sich im Verhältnis zum ersten starren Fahrzeugaufbauabschnitt (12) dreht, und
- einen flexiblen Fahrzeugaufbauabschnitt (16), der zwischen dem ersten und dem zweiten starren Fahrzeugaufbauabschnitt verläuft und einen Faltenbalg (18) umfasst,
**dadurch gekennzeichnet, dass** das Fahrzeug ferner ein verformbares flächiges Teil (74) aufweist, das Zugang zum Faltenbalg (18) verhindert, wobei das genannte verformbare flächige Teil (74) Folgendes umfasst:
- einen ersten befestigten Teil (76), der im Verhältnis zum ersten starren Fahrzeugaufbauabschnitt (12) stationär ist;
- einen zweiten befestigten Teil (78), der im Verhältnis zum zweiten starren Fahrzeugaufbauabschnitt (14) stationär ist;
- einen in Richtung auf die longitudinale vertikale mittlere Ebene des flexiblen Fahrzeugaufbauabschnitts (16) vorstehenden konvexen flexiblen Zwischenteil (80), der sich verformt, wenn der zweite Fahrzeugaufbauabschnitt (14) sich im Verhältnis zum ersten Fahrzeugaufbauabschnitt (12) dreht.

16. Gelenkiges Fahrzeug zur Personenbeförderung nach Anspruch 15, bei dem der erste befestigte Teil (76) an einem ersten Sitz (70) angebracht ist.

17. Gelenkiges Fahrzeug zur Personenbeförderung nach Anspruch 16, bei dem der zweite befestigte Teil (78) an einem zweiten Sitz (72) angebracht ist.

18. Gelenkiges Fahrzeug nach Anspruch 16 oder 17, bei dem
- der flexible Fahrzeugaufbauabschnitt eine Innenbreite hat, die kleiner ist als die Innenbreite des ersten starren Fahrzeugaufbauabschnitts (12);
- der erste Sitz (70) sich in den flexiblen Fahrzeugaufbauabschnitt (16) hinein erstreckt und einen ersten Sitzteil (70A), der einem Längsende des ersten starren Fahrzeugaufbauabschnitts (12) zugekehrt ist, und einen zweiten Sitzteil (70B), der einwärts in Richtung auf eine longitudinale vertikale mittlere Ebene des Fahrzeugs zu gekehrt ist, aufweist.

19. Fahrzeug nach Anspruch 18, bei dem der Sitz (70) eine bogenförmige Gestalt hat.

## Revendications

1. Véhicule articulé pour le transport de voyageurs comprenant :
- une première section de carrosserie de voiture rigide (12) ;
- une seconde section de carrosserie de voiture rigide (14) qui tourne par rapport à la première section de carrosserie de voiture rigide (12) au moins autour d'un axe de rotation vertical ;
- une section de carrosserie de voiture flexible (16) qui s'étend entre les première et seconde sections de carrosserie de voiture rigide et qui délimite une zone d'intercommunication ;
- un premier siège (28, 70) supporté par la première section de carrosserie de voiture rigide (12) ; et
- un élément (30, 60, 72) supporté par l'une de la seconde section de carrosserie de voiture rigide (30) ou de la section de carrosserie de voiture flexible (16) ;
**caractérisé en ce que** le véhicule comprend en outre des moyens déformables (50, 64, 74) qui se déforment lorsque la seconde section de carrosserie de voiture rigide tourne par rapport à la première section de carrosserie de voiture rigide autour de l'axe vertical de rotation, afin d'empêcher l'ouverture entre le premier siège et l'élément d'un espace accessible à partir de la zone d'intercommunication.

2. Véhicule articulé selon la revendication 1, dans lequel le premier siège repose contre l'élément et les moyens déformables comprennent des moyens d'inclinaison résilients (50, 64) permettant d'incliner le premier siège (28) vers l'élément (30, 60) et/ou l'élément (30, 60) vers le premier siège (28).

3. Véhicule articulé selon la revendication 2, dans lequel les éléments d'inclinaison résilients comprennent au moins un ressort (50, 64).

4. Véhicule articulé selon l'une quelconque des revendications 2 ou 3, dans lequel le premier siège (28) peut se déplacer par rapport à la première section de carrosserie de voiture rigide (12) et les moyens d'inclinaison résilients comprennent des moyens d'inclinaison de siège (50) qui inclinent le premier siège (28) vers l'élément (30, 60).

5. Véhicule articulé selon la revendication 4, comprenant en outre des moyens de guidage permettant de guider le déplacement du premier siège (28) par rapport à la première section de carrosserie de voiture rigide (12).

6. Véhicule articulé selon la revendication 4 ou la revendication 5, dans lequel l'élément (60) est fixé par rapport à ladite une de la seconde section de carrosserie de voiture rigide (14) ou de la section de carrosserie de voiture flexible (16).

7. Véhicule articulé selon l'une quelconque des revendications 2 à 5, dans lequel l'élément (62) peut se déplacer par rapport à ladite une de la seconde section de carrosserie de voiture rigide (14) ou de la section de carrosserie de voiture flexible (16) et les moyens d'inclinaison résilients comprennent des moyens d'inclinaison d'élément (64) permettant d'incliner l'élément (62) vers le premier siège (28).

8. Véhicule articulé selon la revendication 2, dans lequel les moyens d'inclinaison de l'élément comprennent un ressort (64) fixé sur l'élément (62) et sur la première section de carrosserie de voiture rigide (12).

9. Véhicule articulé selon l'une quelconque de revendications précédentes, dans lequel les moyens déformables comprennent une feuille flexible convexe (74) qui fait saillie vers un plan central longitudinal du véhicule.

10. Véhicule articulé selon la revendication 9, dans lequel la feuille flexible (74) comprend une couche de silicone et une couche de renfort fournissant une résistance mécanique.

11. Véhicule articulé selon l'une quelconque des revendications précédentes, dans lequel l'élément est un second siège (62, 72) supporté par la seconde section de carrosserie de voiture rigide (14).

12. Véhicule articulé selon l'une quelconque des revendications précédentes, dans lequel le premier siège (28, 70) s'étend au moins partiellement dans la section de carrosserie de voiture flexible (16).

13. Véhicule articulé selon l'une quelconque des revendications précédentes, dans lequel
- la section de carrosserie de voiture flexible présente une largeur interne qui est inférieure à la largeur interne de la première section de carrosserie de voiture rigide (12) ;
- le premier siège (70) s'étend dans la section de carrosserie de la voiture flexible (16) et inclut une première partie d'assise (70A) qui fait face à une extrémité longitudinale de la première section de carrosserie de voiture rigide (12), et une seconde portion d'assise (70B) qui fait face vers l'intérieur en direction d'un plan central vertical longitudinal du véhicule.

14. Véhicule selon la revendication 13, dans lequel le siège (70) a une forme arquée.

15. Véhicule articulé pour le transport de voyageurs comprenant :
- une première section de carrosserie de voiture rigide (12);
- une seconde section de carrosserie de voiture rigide (14) qui tourne par rapport à la première section de carrosserie de voiture rigide (12) ; et
- une section de carrosserie de voiture flexible (16) qui s'étend entre les première et seconde sections de carrosserie de voiture rigide et comprend un soufflet (18) ;
**caractérisé en ce que** le véhicule comprend en outre une feuille déformable (74) qui empêche l'accès au soufflet (18), ladite feuille déformable (74) comprenant :
- une première partie fixe (76) qui est immobile par rapport à la première section de carrosserie de voiture rigide (12);
- une seconde portion fixe (78) qui est immobile par rapport à la seconde section de carrosserie de voiture rigide (14) ;
- une portion intermédiaire flexible convexe (80) qui fait saillie vers le plan central vertical longitudinal de la section de carrosserie de voiture flexible (16), qui se déforme lorsque la seconde section de carrosserie de voiture (14) tourne par rapport à la première section de carrosserie de voiture (12).

16. Véhicule articulé pour le transport de voyageurs selon la revendication 15, dans lequel la première partie fixe (76) est fixée à un premier siège (70).

17. Véhicule articulé pour le transport de voyageurs selon la revendication 16, dans lequel la seconde partie fixe (78) est fixée à un second siège (72).

18. Véhicule articulé selon la revendication 16 et 17 dans lequel .
- la section de carrosserie de voiture flexible présente une largeur interne qui est inférieure à la largeur interne de la première section de carrosserie de voiture rigide (12) ;
- le premier siège (70) s'étend dans la section de carrosserie de voiture flexible (16) et inclut une première partie d'assise (70A) qui fait face à une extrémité longitudinale de la première section de carrosserie de voiture rigide (12), et une seconde partie de siège (70B) qui fait face vers l'intérieur, en direction d'un plan central vertical longitudinal du véhicule.

19. Véhicule selon la revendication 18, dans lequel le siège (70) présente une forme arquée.
